# EUROPÄISCHE PATENTSCHRIFT

(11) **EP 2 757 001 B1**
(45) Veröffentlichungstag und Bekanntmachung des Hinweises auf die Patenterteilung: **13.01.2016**
(21) Anmeldenummer: 14150974.5
(22) Anmeldetag: 13.01.2014
(51) Int. Cl.: B60R 25/25

(54) **Verfahren und Vorrichtung für Fahrzeugzugangskontrolle**
Method and device for vehicle access control
Procédé et dispositif de contrôle d'accès à un véhicule

(30) Priorität: 18.01.2013 DE 102013200777
(43) Veröffentlichungstag der Anmeldung: 23.07.2014
(73) Patentinhaber: Ford Global Technologies, LLC, Dearborn, MI 48126 (US)
(72) Erfinder: Gussen, Uwe, 52393 Hürtgenwald (DE); Arndt, Christoph, 57583 Mörlen (DE); Stefan, Frederic, 52072 Aachen (DE)
(74) Vertreter: Dörfler, Thomas

(56) Entgegenhaltungen:
- EP-A1- 2 500 218
- WO-A1-2012/139619
- DE-A1-102005 020 847
- US-A1- 2005 030 151
- US-A1- 2006 055 509
- US-A1- 2009 203 998
- US-B1- 6 323 761

## Beschreibung

Die Erfindung betrifft ein Verfahren und eine Vorrichtung zum Identifizieren einer Person als eine zum Führen eines Kraftfahrzeugs befugte Person, gemäß den Oberbegriffen der unabhängigen Patentansprüche.

Im Stand der Technik sind viele Systeme zur Fahrzeugzugangskontrolle bekannt. Anstelle von klassischen mechanischen Zündschlüsseln oder zusätzlich sind heutzutage häufig elektronische Fahrzeugzugangskontrollsysteme mit Transpondern in elektronischen Fahrzeugschlüsseln vorgesehen, d h. Schlüsseln ohne Bart und mit integrierter Digitalelektronik, mit der man die Fahrzeugtüren ferngesteuert entriegeln und den Motor starten kann. Diese Systeme erkennen die im Besitz des elektronischen Zündschlüssels befindliche Person als eine zum Betreten bzw. Fahren eines Kraftfahrzeugs befugte Person an. Dies gilt auch für Kartensysteme, z.B. solche, die eine Fahrlizenzkarte per Funk auslesen.

Weiterhin sind sicherere Fahrzeugzugangskontrollsysteme, die befugte Personen anhand von biometrischen Merkmalen identifizieren, bekannt, z.B. anhand der Retina oder des Fingerabdrucks einer Zugang begehrenden Person.

Die DE 10 2005 020 847 A1 offenbart ein Verfahren zur berührungslosen Erfassung von biometrischen Merkmalen von Passagieren in einem Kraftfahrzeug, das auch zur Identifizierung von Personen genutzt werden kann. Zu diesem Zweck ist in einem Kraftfahrzeugsitz ein Ultrabreitband-Radar mit sehr kurzen Impulsen eingebaut, das die Eigenbewegungen der Herzkammern des Insassen detektieren kann. Anhand der charakteristischen Signatur des Herzschlags kann die Person auf dem Sitz identifiziert werden, weil bekanntermaßen jeder Mensch einen eindeutigen Herzschlag und Herzschlagrhythmus hat, der auch bei geistiger oder körperlicher Beanspruchung identifizierbar bleibt. Geeignete elektronisch kontrollierte Fahrzeugsitze sind aber sehr aufwändig

Die WO 2012/139619 A1 offenbart ein Verfahren zur Überwachung eines Fahrzeuginsassen, wobei mittels einer auf den sitzenden Fahrzeuginsassen gerichteten Bilderfassungseinheit, die eine Videokamera mit geringer Auflösung wie z.B. eine CCD-Kamera sein kann, Bilder des Fahrzeuginsassen erfasst werden, z.B. in Form einer Videosequenz, und mittels einer Bildverarbeitungseinheit ausgewertet werden, um mindestens einen Vitalparameter des Fahrzeuginsassen zu ermitteln, z.B. eine Pulsfrequenz bzw. Herzfrequenz. Dazu wird ein optischer Absorptionswert und/oder ein Intensitätswert von Licht, das von einem Hautbereich des Fahrzeuginsassen reflektiert wird, erfasst und/oder wird eine Änderung dieser Werte ermittelt.

Der Erfindung liegt die Aufgabe zu Grunde, ein Verfahren und eine Vorrichtung zum Identifizieren einer Person als eine zum Führen eines Kraftfahrzeugs befugte Person zu schaffen, die mit wenig Aufwand realisierbar sind.

Diese Aufgabe wird durch ein Verfahren und eine Vorrichtung mit den Merkmalen der unabhängigen Patentansprüche gelöst. Vorteilhafte Weiterbildungen der Erfindung sind in den abhängigen Patentansprüchen angegeben.

Gemäß der Erfindung wird mittels einer im Kraftfahrzeug eingebauten elektronischen Kamera ein Stück Haut einer Zugang zum Kraftfahrzeug begehrenden Person gefilmt. Es wird ermittelt, wie sich mindestens eine Charakteristik des gefilmten Hautstücks zeitlich ändert. Die zeitliche Änderung der Charakteristik des gefilmten Hautstücks wird mit gespeicherten Herzschlagrhythmus-Referenzdaten von befugten Personen verglichen. Der Person wird Zugang zu dem Kraftfahrzeug gewährt, wenn die zeitliche Änderung der Charakteristik des gefilmten Hautstücks mindestens in einem vorbestimmten Grad mit den Referenzdaten übereinstimmt.

Eine Kamera ist sehr viel weniger aufwändig als ein Ultrabreitband-Radar, und häufig ist bei heutigen Kraftfahrzeugen eine für das Verfahren geeignete Kamera schon eingebaut, so dass die Erfindung einfach mittels zusätzlicher Software in der Kraftfahrzeugelektronik realisierbar ist.

Bevorzugte Charakteristiken des gefilmten Hautstücks sind die Färbung und die Schwellung der Haut.

http://www.technologyreview.com/news/425758/smart-phone-app-tracks-heart-rate/ offenbart, dass es prinzipiell möglich ist, mittels einer elektronischen Kamera, hier der Kamera eines Smartphones, vor die man einen Finger hält, minimale Änderungen der Färbung der Haut einer Person zu erkennen, die durch das Pulsieren des Blutflusses verursacht werden, und daraus eine Signatur des Herzschlags zu gewinnen. Es wird dort vorgeschlagen, dies zur Erkennung eines Herzschlagrisikos zu verwenden, aber nicht für irgendwelche Zugangskontrollen.

Unter der Färbung des gefilmten Hautstücks wird hier ein kontinuierliches Farbspektrum oder ein diskontinuierliches Farbspektrum verstanden, wobei Letzteres auch nur eine oder einige Wellenlängen umfassen kann, da die Herzschlagsignatur in bestimmten Wellenlängenbereichen möglicherweise leichter erkennbar ist als in anderen.

In dem Artikel http://www.farbimpulse.de/Herschlag-laesst-Gesichtsfarbe-pulsie-ren.herzschlag.0.html wird beschrieben, wie neben der zeitlichen Farbänderung der Haut auch das zeitliche An- und Abschwellen der Haut aufgrund des Herzschlags erfaßt werden kann. Damit eignet sich als Charakteristik für die Erfassung der Herzschlagsignatur sowohl die zeitliche Änderung der Färbung als auch das zeitliche An- und Abschwellen der Haut und auch die Kombination von beiden.

Gemäß der Erfindung umfasst der gewährte Zugang das Öffnen von mindestens einer Tür des Kraftfahrzeugs, wobei die elektronische Kamera eine Region außerhalb des Kraftfahrzeugs erfasst und wobei eine Zutritt zu dem Kraftfahrzeug begehrende Person aufgefordert wird, einen bloßen Körperteil vor die Kamera zu halten. Der gewährte Zugang kann auch das Starten eines Motors des Kraftfahrzeugs umfassen.

Die Türöffnungsprozedur kann dabei wie aus dem Stand der Technik für schlüssellose Zugangssysteme bekannt durchgeführt werden. Dann schaltet sich die Kamera zur Herzschlagerkennung beim Vorliegen bestimmter Sachverhalte ein, z.B. wenn die Türklinke betätigt wird, wenn eine Person im Nahbereich des Fahrzeugs erkannt wird, oder es erfolgt eine Nahfeldkommunikation, z.B. mittels kapazitiver Sensoren.

In einer bevorzugten Ausführungsform ist die elektronische Kamera eine für irgendein Fahrerassistenzsystem und/oder für Cockpit-Überwachung vorgesehene Kamera. Vorzugsweise ist die elektronische Kamera eine vom Umgebungslicht unabhängige LIDAR-Kamera.

Wenn eine Person als eine befugte Person identifiziert wird, können zu der identifizierten Person gespeicherte Voreinstellungen z. B. von Sitzpositionen, Spiegelposition, Temperatur, Radiosender u. dgl. im Kraftfahrzeug eingestellt werden.

In einer bevorzugten Ausführungsform wird das erfindungsgemäße Verfahren mit einem sog. MyKey®-System kombiniert. Dies ist ein System zur automatischen Einschränkung oder Zwangsaktivierung von bestimmten Funktionen eines Kraftfahrzeugs in Abhängigkeit von personenbezogenen Daten, die einem persönlichen elektronischen Fahrzeugschlüssel, der seinen Inhaber gegenüber der Fahrzeugelektronik als einen zum Führen des Kraftfahrzeugs befugten Fahrer ausweist, eindeutig zugeordnet sind. Dieser persönliche Fahrzeugschlüssel ist individuell programmierbar, so dass das Kraftfahrzeug mit diesem Schlüssel nur in einem eingeschränkten Fahrmodus betreibbar ist. So können die Höchstgeschwindigkeit, die Fahrzeugbeschleunigung und/oder die Lautstärke der Audioanlage auf voreingestellte Maximalwerte beschränkt sein, oder bestimmte Fahrzeugsicherheitssysteme oder Fahrerassistenzsysteme sind bzw. werden dauerhaft aktiviert, z.B. Gurtanlegewarnung, Spurhalteassistent oder Abstandsregeltempomat. Dieses System ist für bestimmte Personen gedacht, in erster Linie Fahranfänger, denen der elektronische Fahrzeugschlüssel ausgehändigt wird.

In der Kombination mit dem MyKey®-System umfasst das erfindungsgemäße Anwenden von Voreinstellungen auf das Kraftfahrzeug eine automatische Einschränkung oder Zwangsaktivierung von bestimmten Funktionen des Kraftfahrzeugs in Abhängigkeit von personenbezogenen Daten, die einem persönlichen elektronischen Fahrzeugschlüssel, der seinen Inhaber gegenüber der Fahrzeugelektronik als einen zum Führen des Kraftfahrzeugs befugten Fahrer ausweist, eindeutig zugeordnet sind.

Die Erfindung wird nachfolgend anhand des in den Zeichnungen dargestellten Ausführungsbeispiels näher erläutert. Es zeigen:
- Fig. 1: eine Prinzipskizze eines Systems zum Identifizieren einer Person als eine zum Führen eines Kraftfahrzeugs befugte Person,
- Fig. 2: eine in einen Seitenspiegel integrierte Kamera für das in Fig. 1 gezeigte Systems,
- Fig. 3: eine hinter einer Windschutzscheibe angeordnete Kraftfahrzeug-Frontkamera für das Fig. 1 gezeigte System,
- Fig. 4: eine hinter einem Seitenfenster angeordnete Kamera für das Fig. 1 gezeigte System, und
- Fig. 5: ein Flussdiagramm eines Verfahrens zum Identifizieren einer Person als eine zum Führen eines Kraftfahrzeugs befugte Person.

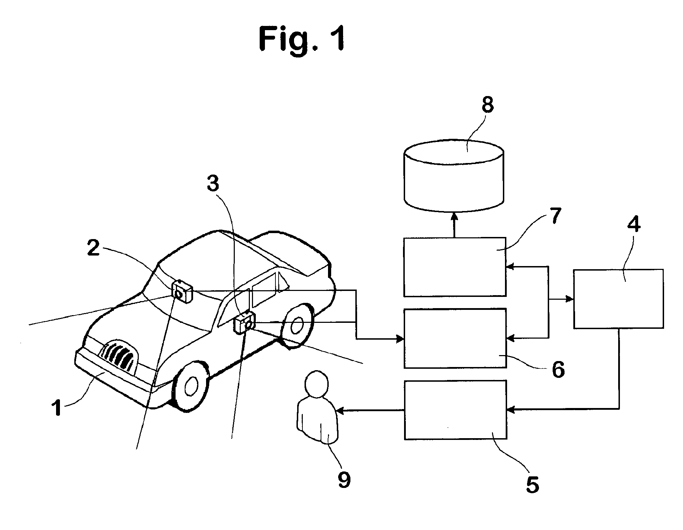

In Fig. 1 enthält ein Kraftfahrzeug 1 eine in Fahrtrichtung gerichtete Frontkamera 2 und/oder eine zur Seite gerichtete Seitenkamera 3. Die Kameras 2 bzw. 3 können Kameras sein, wie sie für irgendwelche Fahrerassistenzsysteme verwendet werden, so z.B. eine hinter einer Windschutzscheibe angeordnete Frontkamera 2 für ein System zur Kollisionsvermeidung bei niedrigen Geschwindigkeiten bzw. eine an einer Seite des Kraftfahrzeugs 1 angeordnete Kamera 3 für einen Totwinkelerkennungs-Assistenten. Die Kameras 2 bzw. 3 können CCD- oder LIDAR-Kameras sein, wobei Letztere den Vorzug haben, vom Umgebungslicht unabhängig zu sein.

Das Kraftfahrzeug 1 enthält außerdem Bordelektronik, die eine Fahreridentifizierungseinheit 4, eine Mensch-Maschine-Schnittstelle 5, eine Herzschlagextraktionseinheit 6, eine Klassifizierungseinheit 7 und einen Datenspeicher 8 für Herzschlag-Referenzmuster in Form von Herzschlagrhythmus-Referenzdaten enthält.

Die Fahreridentifizierungseinheit 4 ist eine in einem Bordcomputer der Bordelektronik laufende Ablaufsteuerroutine. Diese startet bzw. wird aufgeweckt, wenn sich eine Person 9 dem Kraftfahrzeug 1 nähert. Ein Wunsch der Person 9, Zugang zu dem Kraftfahrzeug 1 zu erhalten, kann z.B. per Funk- oder Infrarotsignal an das Kraftfahrzeug 1 übermittelt werden. Alternativ ist auch vorstellbar, dass ein Alarmsystem die Umgebung des Kraftfahrzeugs 1 überwacht und bestimmte Verhaltensweisen oder Gesten einer sich nähernden Person 9 als Zugangswunsch interpretiert.

Wird ein Zugangswunsch erkannt, fordert die Fahreridentifizierungseinheit 4 die Person 9 mittels der Mensch-Maschine-Schnittstelle 5, die z.B. einfach ein kleines Blinklicht sein kann, auf, einen sichtbaren Körperteil wie z.B. einen Finger, eine Hand, das Gesicht oder ein anderes bloßes Stück Haut eine gewisse Zeit lang vor die Kamera 2 oder 3 zu halten.

Der während dieser Zeit von der Kamera 2 oder 3 aufgenommene Film wird von der Herzschlagextraktionseinheit 6 analysiert, um Herzschlagrhythmus-Daten der Person 9 zu gewinnen. Die Klassifizierungseinheit 7 bringt die gewonnenen Herzschlagrhythmus-Daten in ein Format, das einen direkten Vergleich mit vorher gewonnenen Herzschlagrhythmus-Referenzdaten erlaubt, die im Datenspeicher 8 gespeichert sind.

Wenn die Fahreridentifizierungseinheit 4 eine ausreichende Übereinstimmung zwischen den Herzschlagrhythmus-Daten der Person 9 und gespeicherten Herzschlagrhythmus-Referenzdaten feststellt, werden die Fahrzeugtüren entriegelt und wird der Person 9 erlaubt, das Kraftfahrzeug 1 mit einem Startknopf zu starten. Die erfolgreiche Identifizierung kann mit einem Bestätigungssignal quittiert werden, damit die Person 9 weiß, wann diese den Finger von der Kamera 2 oder 3 entfernen kann.

Wenn die Fahreridentifizierungseinheit 4 keine ausreichende Übereinstimmung zwischen den Herzschlagrhythmus-Daten der Person 9 und gespeicherten Herzschlagrhythmus-Referenzdaten feststellt, kann irgendein Alarm ausgelöst werden und/oder kann ein neuer Zugangsversuch zugelassen werden.

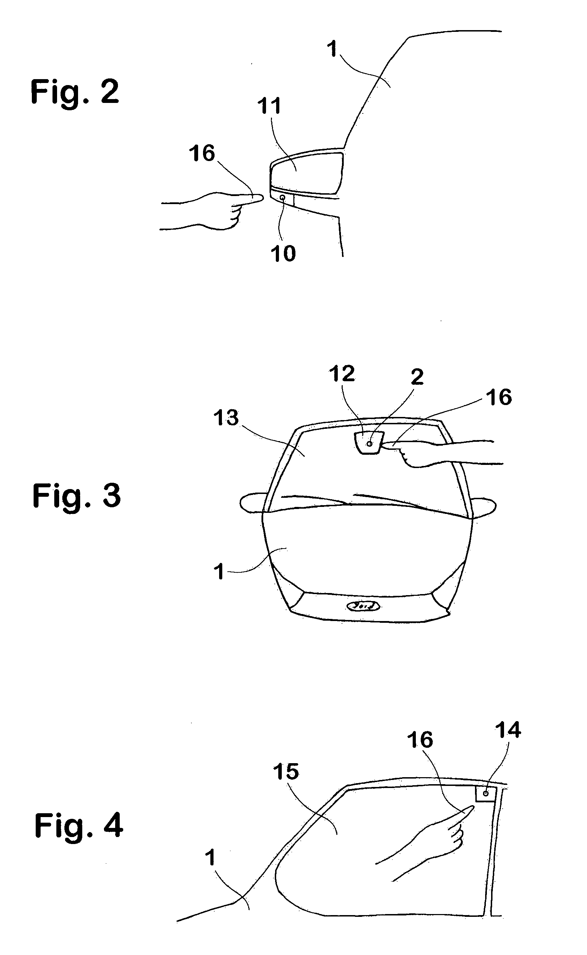

Fig. 2 zeigt ein spezielles Beispiel für die Anordnung einer für das Fahreridentifizierungssystem bestimmten Kamera 10, nämlich in einen Seitenspiegel 11 des Kraftfahrzeugs 1 integriert. Derartige Kameras gibt es oft bei Einpark-Assistenten oder Totwinkelerkennungs-Assistenten.

Fig. zeigt 3 ein spezielles Beispiel für die Anordnung der Kamera 2 von Fig. 1, nämlich im Bereich eines Rückspiegels 12 hinter einer Windschutzscheibe 13 des Kraft-Kraftfahrzeugs 1. Eine derartige Kamera wird derzeit z. B. als LIDAR-Frontkamera für Kollisionsvermeidung bei niedrigen Geschwindigkeiten verwendet.

Fig. 4 zeigt ein weiteres spezielles Beispiel für die Anordnung einer für das Fahreridentifizierungssystem bestimmten Kamera 14 in einer rechten oberen Ecke eines Seitenfensters 15 der Fahrertür des Kraftfahrzeugs. Diese Anordnung hat den Vorzug einer besonders guten Zugänglichkeit, und auch die Kamera 14 kann zusätzlich für weitere Zwecke verwendet werden, z.B. für Erkennung von Diebstahlversuchen, Überwachung des Verkehrs neben dem Kraftfahrzeug 1, usw.

In einem weiteren, nicht zeichnerisch dargestellten Beispiel, das als solches nicht Gegenstand der Patentansprüche ist, wird als eine Kamera des Fahreridentifizierungssystems eine auch für Cockpit-Überwachung vorgesehene Kamera verwendet, welche die auf dem Fahrersitz sitzende Person im Blickfeld hat. Mittels einer derartigen Kamera kann natürlich nicht das Entriegeln der Türen gesteuert werden, doch kann das Fahren als solches unterbunden werden, wenn die auf dem Fahrersitz sitzende Person nicht als eine berechtigte Person erkannt wird, und außerdem können zu befugten Personen gespeicherte Voreinstellungen auf das Kraftfahrzeug 1 angewendet werden. Eine derartige Kamera hat den Vorteil, dass man die Identifizierung nicht außerhalb des Fahrzeugs abwarten muss, und außerdem dürfte es in diesem Fall eher möglich sein, Herzschlagrhythmus-Daten aus der Gesichtsfarbe der auf dem Fahrersitz sitzenden Person zu gewinnen, so dass diese in keiner Weise selbst aktiv werden muss.

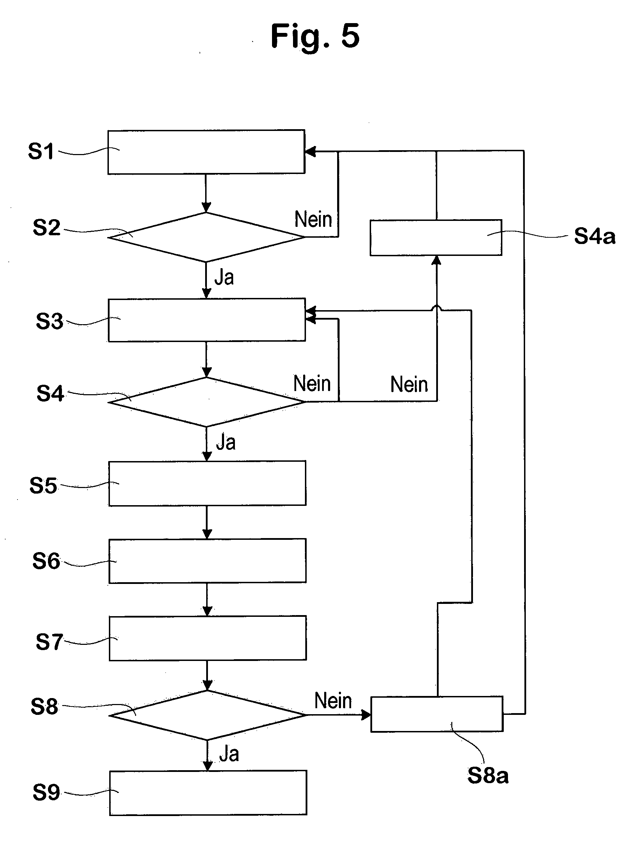

Eine Kamera wie unter Bezugnahme auf Figuren 1 bis 4 beschrieben filmt den davor gehaltenen Finger 16 einer Person 9; die zeitliche Änderung der Färbung des gefilmten Hautstücks wird mit den gespeicherten Herzschlagrhythmus-Referenzdaten von befugten Personen verglichen; und es wird Zugang zu dem Kraftfahrzeug 1 gewährt, wenn die zeitliche Änderung der Färbung des gefilmten Hautstücks mit den Referenzdaten übereinstimmt, zumindest in einem vorbestimmten Grad. Dies wird unter Bezugnahme auf Fig. 5 näher beschrieben.

Im Schritt S1 des Flussdiagramms von Fig. 5 wartet das Fahreridentifizierungssystem auf eine Anforderung nach Zugang zu dem Kraftfahrzeug 1. Dieser Wartezustand wird jedes Mal betreten, wenn ein Fahrer das Kraftfahrzeug 1 verlässt und verriegelt.

Im Schritt S2 wird geprüft, ob eine Person 9 an das Kraftfahrzeug 1 herantritt und/oder einen Zugangswunsch signalisiert, z. B. mittels eines elektronischen Fahrzeugschlüssels, eines Smartphones u. dgl. Ist dies der Fall, wird das Fahreridentifizierungssystem aktiviert; andernfalls geht es zum Schritt S1 zurück.

Im Schritt S3 fordert das aktivierte Fahreridentifizierungssystem die Person 9 auf, einen oder mehrere Finger vor eine Kamera 2, 3, 10 oder 14 (Figuren 1 bis 4) zu halten. Die Stelle, wo die Finger hinzuhalten sind, kann der Person 9 durch ein Tonsignal oder durch ein LED-Blinklicht mit einer bestimmten Farbe und/oder Blinkfrequenz angezeigt werden, welches nahe an Kamera erzeugt wird, und/oder es kann eine entsprechende Nachricht an das Smartphone einer als zugangsberechtigt registrierten Person 9 gesendet werden.

Im Schritt S4 wird geprüft, ob die Person 9 ihre Finger vor die Kamera hält. Wenn dies nicht der Fall ist, wird der Schritt S3 wiederholt, und wenn dies wiederholt nicht der Fall ist, z.B. die Person 9 nicht reagiert oder ihre Absicht ändert, wird im Schritt S4a eine Zeitsperre aktiviert, in der das Fahreridentifizierungssystem nicht ansprechbar ist, und nach Ablauf der Zeitsperre geht es zum Schritt S1 zurück.

Wenn im Schritt S4 bestätigt wird, dass die Person 9 ihre Finger vor die Kamera hält, werden die Finger im Schritt S5 mindestens einige Herzschläge lang gefilmt, und aus diesem Film werden Herzschlagrhythmus-Daten der Person 9 gewonnen.

Im Schritt S6 werden die gewonnenen Herzschlagrhythmus-Daten in ein Format gebracht, das einen direkten Vergleich mit gespeicherten Herzschlagrhythmus-Referenzdaten von als zugangsberechtigt registrierten Personen 9 erlaubt. Dieser Vergleich findet im Schritt S7 statt. Die Herzschlagrhythmus-Referenzdaten können in irgendeinem sicheren Registrierungsprozess gewonnen bzw. geändert werden.

Wird im Schritt S8 bejaht, dass die von der Person 9 gewonnenen Herzschlagrhythmus-Daten mit gespeicherten Herzschlagrhythmus-Referenzdaten übereinstimmen oder mindestens in einem vorbestimmten Grad damit übereinstimmen, ist die Person 9 erfolgreich als zugangsberechtigt identifiziert, und im Schritt S9 wird das Kraftfahrzeug 1 entriegelt und wird der Person 9 erlaubt, das Kraftfahrzeug 1 zu starten. Außerdem können zu der identifizierten Person 9 gespeicherte Voreinstellungen auf das Kraftfahrzeug angewendet werden, z.B. Sitzpositionen, Spiegelposition, Temperatur im Fahrzeuginnenraum, Radiosender, u. dgl. Mit dem Schritt S9 endet das Verfahren, indem es zum Schritt S1 zurückgeht.

Wenn die von der Person 9 gewonnenen Herzschlagrhythmus-Daten nicht mit gespeicherten Herzschlagrhythmus-Referenzdaten übereinstimmen, ist die Person 9 nicht erfolgreich als zugangsberechtigt identifiziert, und im Schritt S8a wird die Person 9 z.B. durch ein Tonsignal oder LED-Blinklicht oder eine Funknachricht an das Smartphone einer als zugangsberechtigt registrierten Person 9 über die fehlgeschlagene Identifizierung unterrichtet, und es geht zum Schritt S3 zurück. Im Falle von wiederholten Identifizierungsfehlschlägen geht es zum Schritt S1 zurück, und in diesem Fall kann vorgesehen sein, dass Kraftfahrzeug 1 eine Datenverbindung mit einem Operator in einer Zentrale aufbaut, um die Situation zu klären. Möglicherweise ist die Person 9 nicht korrekt in der Datenbank von zugangsberechtigten Benutzern des Kraftfahrzeugs 1 registriert. Möglicherweise gibt es auch ein Problem mit der Kamera, z.B. Schmutz vor dem Kameraobjektiv, der die Sicht der Kamera beeinträchtigt, zu wenig Batteriespannung, u. dgl. In einem derartigen Fall könnte die Person 9 von dem Operator als zugangsberechtigt identifiziert werden, z. B. mittels eines Smartphones, und in diesem Fall sollte der Operator die Möglichkeit haben, das Kraftfahrzeug 1 aus der Ferne zu entriegeln.

## Patentansprüche

1. Verfahren zum Identifizieren einer Person (9) als eine zum Führen eines Kraftfahrzeugs (1) befugte Person, bei welchem
- mittels mindestens einer im Kraftfahrzeug (1) eingebauten elektronischen Kamera (2, 3, 10, 14) ein Stück Haut einer Zugang zum Kraftfahrzeug (1) begehrenden Person (9) gefilmt wird;
- ermittelt wird, wie sich mindestens eine Charakteristik des gefilmten Hautstücks zeitlich ändert;
- die zeitliche Änderung der Charakteristik des gefilmten Hautstücks mit gespeicherten Herzschlagrhythmus-Referenzdaten (8) von befugten Personen verglichen wird;
- Zugang zu dem Kraftfahrzeug (1) gewährt wird, wenn die zeitliche Änderung der Charakteristik des gefilmten Hautstücks mindestens in einem vorbestimmten Grad mit den Herzschlagrhythmus-Referenzdaten übereinstimmt, wobei der gewährte Zugang das Öffnen von mindestens einer Tür des Kraftfahrzeugs (1) umfasst; und
- die mindestens eine elektronische Kamera (2, 3, 10, 14) eine Region außerhalb des Kraftfahrzeugs (1) erfasst, wobei eine Zutritt zu dem Kraftfahrzeug (1) begehrende Person aufgefordert wird, einen bloßen Körperteil vor die Kamera (2, 3, 10, 14) zu halten.

2. Verfahren nach Anspruch 1,
**dadurch gekennzeichnet, dass**
Charakteristiken des gefilmten Hautstücks die Färbung und die Schwellung der Haut sind.

3. Verfahren nach Anspruch 1 oder 2,
**dadurch gekennzeichnet, dass**
der gewährte Zugang das Starten eines Motors des Kraftfahrzeugs (1) umfasst.

4. Verfahren nach einem der vorhergehenden Ansprüche,
**dadurch gekennzeichnet, dass**
wenn eine Person (9) als eine befugte Person identifiziert wird, zu der identifizierten Person gespeicherte Voreinstellungen auf das Kraftfahrzeug (1) angewendet werden.

5. Verfahren nach Anspruch 4,
**dadurch gekennzeichnet, dass**
das Anwenden der Voreinstellungen eine automatische Einschränkung oder Zwangsaktivierung von bestimmten Funktionen des Kraftfahrzeugs (1) in Abhängigkeit von personenbezogenen Daten, die einem persönlichen elektronischen Fahrzeugschlüssel, der seinen Inhaber gegenüber der Fahrzeugelektronik als einen zum Führen des Kraftfahrzeugs (1) befugten Fahrer ausweist, eindeutig zugeordnet sind, umfasst.

6. Vorrichtung zum Identifizieren einer Person (9) als eine zum Führen eines Kraftfahrzeugs (1) befugte Person, wobei
die Vorrichtung folgendes umfasst:
- mindestens eine in dem Kraftfahrzeug (1) eingebaute elektronische Kamera (2, 3, 10, 14), die eine Region außerhalb des Kraftfahrzeugs (1) erfasst und dafür eingerichtet ist, ein Stück Haut einer Zugang zum Kraftfahrzeug (1) begehrenden Person (9) zu filmen, nachdem diese aufgefordert worden ist, einen bloßen Körperteil vor die Kamera (2, 3, 10, 14) zu halten;
- eine Herzschlagextraktionseinrichtung (6), die dafür eingerichtet ist, aus dem von der elektronischen Kamera (2, 3, 10, 14) aufgenommenen Film Herzschlagrhythmus-Daten der Zugang begehrenden Person (9) zu gewinnen;
- eine Speichereinrichtung (8), die dafür eingerichtet ist, Herzschlagrhythmus-Referenzdaten von einer oder mehreren zugangsberechtigten Personen zu speichern; und
- eine Fahreridentifizierungseinheit (4), die dafür eingerichtet ist, die Herzschlagrhythmus-Daten mit den gespeicherten Herzschlagrhythmus-Referenzdaten zu vergleichen und im Falle einer Übereinstimmung Zugang zu dem Kraftfahrzeug (1) zu gewähren, wobei der gewährte Zugang das Öffnen von mindestens einer Tür des Kraftfahrzeugs (1) umfasst.

7. Vorrichtung nach Anspruch 6,
**dadurch gekennzeichnet, dass**
die Herzschlagextraktionseinrichtung (6) dafür eingerichtet ist, zur Gewinnung der Herzschlagrhythmus-Daten die zeitliche Änderung der Färbung oder der Schwellung des gefilmten Stückes Hautes auszuwerten.

8. Vorrichtung nach Anspruch 6 oder 7,
**dadurch gekennzeichnet, dass**
die mindestens eine elektronische Kamera (2, 3, 10, 14) eine für ein Fahrerassistenzsystem vorgesehene Kamera und/oder eine für Cockpit-Überwachung vorgesehene Kamera ist.

9. Vorrichtung nach einem der Ansprüche 6 bis 8,
**dadurch gekennzeichnet, dass**
die oder mindestens eine elektronische Kamera (2, 3, 10, 14) eine LIDAR-Kamera ist.

## Claims

1. Method for identifying a person (9) as a person authorized to drive a motor vehicle (1), in which method
- a piece of skin of a person (9) seeking access to the motor vehicle (1) is filmed by means of at least one electronic camera (2, 3, 10, 14) installed in the motor vehicle (1) ;
- it is ascertained how at least one characteristic of the filmed piece of skin changes with respect to time;
- the chronological change of the characteristic of the filmed piece of skin is compared to stored heartbeat rhythm reference data (8) of authorized persons;
- access to the motor vehicle (1) is allowed if the chronological change of the characteristic of the filmed piece of skin corresponds at least to a predetermined degree to the heartbeat rhythm reference data, the allowed access comprising the opening of at least one door of the motor vehicle (1); and
- the at least one electronic camera (2, 3, 10, 14) registers a region outside the motor vehicle (1), a person seeking access to the motor vehicle (1) being prompted to hold a bare body part in front of the camera (2, 3, 10, 14).

2. Method according to Claim 1,
**characterized in that** characteristics of the filmed piece of skin are the coloration and the swelling of the skin.

3. Method according to Claim 1 or 2,
**characterized in that** the allowed access comprises the starting of an engine of the motor vehicle (1).

4. Method according to any one of the preceding claims,
**characterized in that** if a person (9) is identified as an authorized person, presets stored for the identified person are applied to the motor vehicle (1).

5. The method according to Claim 4,
**characterized in that** the application of the presets comprises an automatic restriction or forced activation of specific functions of the motor vehicle (1) as a function of person-related data, which are uniquely assigned to a personal electronic vehicle key, which its possessor shows in relation to the vehicle electronics as a driver authorized to drive the motor vehicle (1).

6. Device for identifying a person (9) as a person authorized to drive a motor vehicle (1), **characterized in that** the device comprising the following:
- at least one electronic camera (2, 3, 10, 14), which is installed in the motor vehicle (1), which registers a region outside the motor vehicle (1), and which is configured for the purpose of filming a piece of skin of a person (9) seeking access to the motor vehicle (1), after said person has been prompted to hold a bare body part in front of the camera (2, 3, 10; 14);
- a heartbeat extraction unit (6), which is configured for the purpose of obtaining heartbeat rhythm data of the person (9) seeking access from the film recorded by the electronic camera (2, 3, 10, 14);
- a storage unit (8), which is configured for the purpose of storing heartbeat rhythm reference data of one or more access-authorized persons; and
- a driver identification unit (4), which is configured for the purpose of comparing the heartbeat rhythm data to the stored heartbeat rhythm reference data and allowing access to the motor vehicle (1) in the case of a correspondence, the allowed access comprising the opening of at least one door of the motor vehicle (1).

7. Device according to Claim 6,
**characterized in that** the heartbeat extraction unit (6) is configured for the purpose of analyzing the chronological change of the coloration or the swelling of the filmed piece of skin to obtain the heartbeat rhythm data.

8. Device according to Claim 6 or 7,
**characterized in that** the at least one electronic camera (2, 3, 10, 14) is a camera provided for a driver assistance system and/or a camera provided for cockpit monitoring.

9. Device according to any one of Claims 6 to 8,
**characterized in that** the or at least one electronic camera (2, 3, 10, 14) is a LIDAR camera.

## Revendications

1. Procédé destiné à identifier une personne (9) en tant que personne autorisée à conduire un véhicule automobile (1) pour lequel
- au moyen d'au moins une caméra (2,3,10,14) électronique incorporée dans le véhicule automobile (1) une partie de peau d'une personne (9) demandant un accès au véhicule (1) est filmée,
- on détermine de quelle manière au moins une caractéristique de la partie de peau filmée change dans le temps,
- la modification temporelle de la caractéristique de la partie de peau filmée est comparée aux données de référence de rythme cardiaque mémorisées (8) de la personne autorisée,
- l'accès au véhicule automobile (1) est accordé si la modification temporelle de la caractéristique de la partie de peau filmée au moins à un degré prédéterminé correspond aux données de référence du rythme cardiaque pour lequel l'accès accordé comprend l'ouverture d'au moins une porte du véhicule automobile (1), et
- au moins une caméra électronique (2,3,10,14) saisit une zone en dehors du véhicule automobile (1), pour laquelle une personne demandant un accès au véhicule automobile (1) est invitée à tenir une partie du corps simple devant la caméra (2,3,10,14).

2. Procédé selon la revendication 1
**caractérisé en ce que**
les caractéristiques de la partie de peau filmée sont la coloration et le bombement de la peau.

3. Procédé selon la revendication 1 ou 2
**caractérisé en ce que**
l'accès accordé comprend la mise en marche d'un moteur du véhicule automobile (1).

4. Procédé selon l'une quelconque des revendications précédentes
**caractérisé en ce que**
si une personne (9) est identifiée comme une personne autorisée, les préréglages mémorisés sur le véhicule automobile (1) pour la personne identifiée sont utilisés.

5. Procédé selon la revendication 4
**caractérisé en ce que**
l'utilisation des préréglages comprend une limitation automatique ou une activation obligatoire de certaines fonctions du véhicule automobile (1) en fonction des données relatives à la personne, qui sont rigoureusement attribuées à une clé du véhicule électronique personnelle qui comporte son propriétaire par rapport au système électronique du véhicule en tant que conducteur autorisé à conduire le véhicule automobile (1).

6. Dispositif destiné à identifier une personne (9) en tant que personne autorisée à conduire un véhicule automobile (1), pour lequel le dispositif comprend les éléments suivants :
- au moins une caméra électronique (2,3,10,14) incorporée dans le véhicule automobile (1), qui saisit une zone en dehors du véhicule automobile (1) et est agencée à cet effet pour filmer une partie de peau d'une personne (9) demandant accès au véhicule automobile (1), après que celle-ci a été invitée à tenir une partie du corps simple devant la caméra (2, 3, 10, 14),
- un dispositif d'extraction du rythme cardiaque (6) qui est agencé pour obtenir à partir du film pris par la caméra électronique (2,3,10,14) les données du rythme cardiaque de la personne (9) demandant l'accès,
- un dispositif de mémoire (8), qui est agencé pour mémoriser les données de références du rythme cardiaque d'une ou plusieurs personnes autorisées à avoir accès, et
- une unité d'identification du conducteur (4) qui est agencée pour comparer les données du rythme cardiaque aux données de référence du rythme cardiaque mémorisées et en cas de concordance à accorder l'accès au véhicule automobile (1), pour lequel l'accès autorisé comprend l'ouverture d'au moins une porte du véhicule automobile (1).

7. Dispositif selon la revendication 6
**caractérisé en ce que**
le dispositif d'extraction du rythme cardiaque (6) est agencé pour évaluer la modification temporelle de la coloration ou du bombement de la partie de peau filmée pour obtenir les données du rythme cardiaque.

8. Dispositif selon la revendication 6 ou 7
**caractérisé en ce que**
l'au moins une caméra électronique (2,3,10,14) est prévue pour au moins un système d'aide à la conduite et/ou une caméra prévue pour une surveillance de l'habitacle.

9. Dispositif selon l'une quelconque des revendications 6 à 8
**caractérisé en ce qu'**
au moins une caméra électronique (2,3,10,14) est une caméra LIDAR.
